# EUROPEAN PATENT SPECIFICATION

(11) **EP 2 564 626 B1**
(45) Date of publication and mention of the grant of the patent: **26.07.2017**
(21) Application number: 11718607.2
(22) Date of filing: 26.04.2011
(51) Int. Cl.: H04W 28/08, H04W 84/22, H04W 72/12, H04W 88/06, H04W 84/18

(54) **METHOD AND APPARATUS TO ENABLE AD HOC NETWORKS**
VERFAHREN UND VORRICHTUNG ZUR AKTIVIERUNG VON AD-HOC-NETZWERKEN
PROCÉDÉ ET APPAREIL POUR ACTIVER DES RÉSEAUX AD HOC

(30) Priority: 26.04.2010 US 327894 P
(43) Date of publication of application: 06.03.2013
(73) Proprietor: InterDigital Patent Holdings, Inc., Wilmington, DE 19809 (US)
(72) Inventor: CHINCHOLI, Amith, V., West Babylon, New York 11704 (US); CHARLTON, Gregg, A., Collegeville, Pennsylvania 19426 (US); DEMIR, Alpaslan, East Meadow, New York 11554 (US); KAUR, Samian, Plymouth Meeting, PA 19462 (US); REZNIK, Alexander, Titusville, New Jersey 08560 (US); TOMICI, John, L., Southold, New York 11971 (US)
(74) Representative: Awapatent AB
(86) International application number: PCT/US2011/033950
(87) International publication number: WO 2011/137118

(56) References cited:
- EP-A2- 1 802 147
- EP-A2- 2 091 287
- EP-A2- 2 170 002
- WO-A2-2007/078663
- US-A1- 2009 180 429
- US-A1- 2009 252 134
- US-A1- 2010 048 205

## Description

### BACKGROUND

Consider the case of a multi-node wireless network with many devices or appliances communicating with each other in a local area network. A typical example for this scenario would be a home with many devices accessing the wireless medium to communicate with each other. Some of these devices or appliances need very high bandwidth while some of them require extremely reliable transfer of data. Current wireless technology in a local area network is limited by assigned bandwidth for communication. For example, current technology deployed in a wireless local area network (WLAN) environment is assigned a maximum bandwidth of 40MHz and the maximum throughput promised by the technology is ~300 Mbps. Moreover, in the current WLAN technology, all devices in a network communicate with each other by contending for spectrum access to avoid collisions over the air (i.e., all the devices have to access the spectrum sequentially). Thus, simultaneously running multiple high bandwidth applications, like wireless Hi-Definition video, a multi-player video game, etc., can quickly approach the bandwidth and throughput limits, affecting the quality of service.

Dynamic Spectrum Management (DSM) is a technology which involves identifying and exploiting unused spectrum fragments by sensing the spectrum, and, static/dynamic assignment of spectrum to one of more users in the system. It can be employed across one or more radio access technologies (RATs), one or more operators, and use contiguous or non-contiguous frequency bands.

US 2009/252134 A1 discloses allocation of spectrum to network nodes and discloses selecting a spectrum aware path based on carrier-to-interference ratio, which is based on geography of each network node. The spectrum access is managed to optimize for maximum throughput within an access point domain on a per slot schedule basis.

### SUMMARY

According to a first aspect of the inventive concept, there is provided a method of enabling an ad hoc network, comprising: receiving advertised capabilities from a plurality of available radio access technologies, RATs; comparing quality of service, QoS, requirements of a multimedia application to the advertised capabilities of the available RATs; selecting a radio access technology, RAT, from the plurality of available RATs; allocating multimedia packets to available unlicensed frequency bands for use by the RAT selected from the plurality of available RATs based on the comparison of QoS, requirements of the multimedia application to the advertised capabilities of the available RATs; and using peer-to-peer communication with at least one other node to coordinate a cluster of nodes as the ad hoc network.

According to a second aspect of the inventive concept, there is provided a neighborhood multimedia sharing controller, NMSC, comprising: a dynamic spectrum management, DSM, management entity configured to: receive advertised capabilities from a plurality of available radio access technologies, RATs; compare quality of service, QoS, requirements of a multimedia application to the advertised capabilities of the available RATs; select a radio access technology, RAT, from a plurality of available RATs; allocate multimedia packets to available unlicensed frequency bands for use by the RAT selected from the plurality of available RATs based on the comparison of QoS requirements of the multimedia application to the advertised capabilities of the available RATs; and a network interface configured to perform peer-to-peer communication with at least one other node to coordinate a cluster of nodes as an ad hoc network.

A Neighborhood Multimedia Sharing Controller (NMSC) device may provide a bundled multimedia and infotainment package to a home subscriber from a cellular operator server network that may act as sole provider of all multimedia and infotainment services, bundled into a single package, coming into a home *(e.g.,* high bandwidth internet access and multimedia services to a home over the wireless interface). The NMSC uses dynamic spectrum management across multiple radio access technologies (RATs) supported within the wireless network. A protocol stack design is implemented in which the medium access control (MAC) layer is split into two as a higher MAC layer and a lower MAC layer.

A cluster of NMSC devices may form an ad hoc network to share and exchange interactive multimedia and infotainment services among themselves to enhance social networking within the neighborhood and to offload some of the operator network's load in delivering the same services to multiple homes within the neighborhood or even multiple outlets in the same home.

A spectrum manager, implemented as an NMSC, enables seamless connectivity in the ad hoc network, and facilitates optimum assignment of a bandwidth to an application at a particular time. The spectrum manager optimizes utilization of available spectrum to satisfy the required QoS, allows spectrum aggregation using the same or different RATs, and oversees the spectrum sensing and environment based information fusion while making high throughput real-time multimedia rich content sharing among peer devices possible.

The spectrum manager is capable of a wide range of spectrum sensing, frequency aggregation, and smart radio resource management using information gathered in the neighborhood network. The spectrum manager may be adapted to serve wireless networks the engage in machine-to-machine (M2M), vehicle-to-vehicle (V2V), and peer-to-peer (P2P) communications.

### BRIEF DESCRIPTION OF THE DRAWINGS

A more detailed understanding may be had from the following description, given by way of example in conjunction with the accompanying drawings wherein:
Figure 1A shows an example communications system in which one or more disclosed embodiments may be implemented;
Figure 1B shows an example wireless transmit/receive unit (WTRU) that may be used within the communications system illustrated in Figure 1A;
Figure 1C shows an example radio access network and an example core network that may be used within the communications system illustrated in Figure 1A;
Figure 2 shows an example of spectra usage and allocation according to a dynamic spectrum management (DSM) enabled spectrum manager;
Figure 3 shows an example block diagram for a spectrum manager;
Figure 4 shows an example block diagram for a Neighborhood Multimedia Sharing Controller (NMSC) of an embodiment;
Figure 5 shows an example block diagram for a DSM data adapter of an embodiment;
Figure 6 shows an example neighborhood network implementing the NMSC of Figure 4;
Figure 7 shows a first example of a network configuration implementing multiple NMSCs for distribution of multimedia services;
Figure 8 shows a second example network configuration implementing primary NMSCs for distribution of multimedia services;
Figure 9 shows a signal diagram of a cognition phase for NMSCs in an ad hoc network;
Figure 10 shows an example signal diagram for designating an NMSC relay for accessing media content in an ad hoc network; and
Figure 11 shows an example signal diagram of NMSCs accessing content from an ad hoc network media inventory.

### DETAILED DESCRIPTION

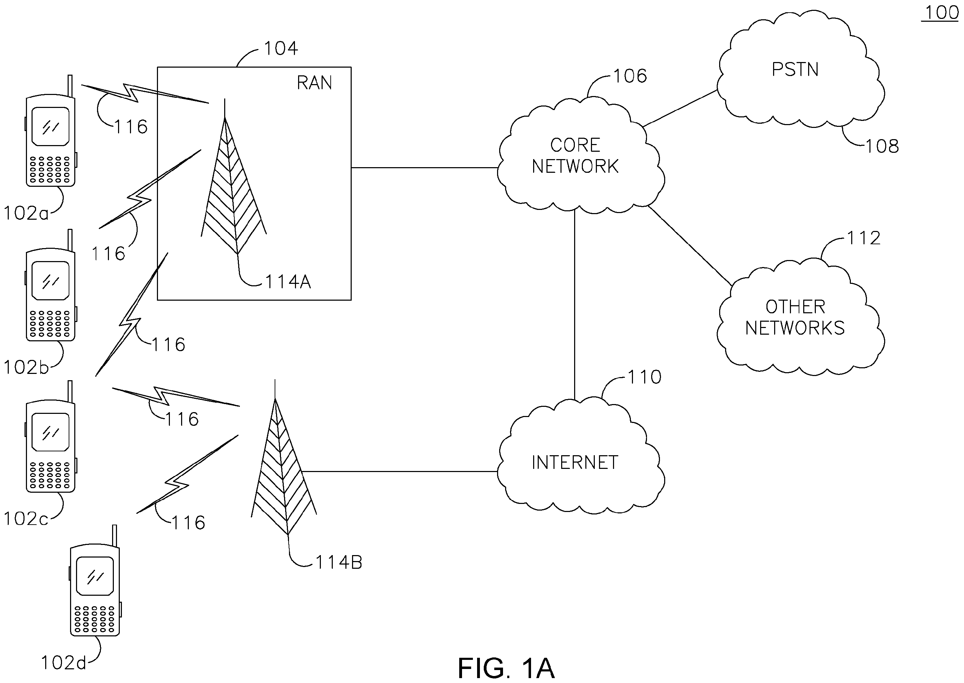

Figure 1A shows an example communications system 100 in which one or more disclosed embodiments may be implemented. The communications system 100 may be a multiple access system that provides content, such as voice, data, video, messaging, broadcast, and the like, to multiple wireless users. The communications system 100 may enable multiple wireless users to access such content through the sharing of system resources, including wireless bandwidth. For example, the communications systems 100 may employ one or more channel access methods, such as code division multiple access (CDMA), time division multiple access (TDMA), frequency division multiple access (FDMA), orthogonal FDMA (OFDMA), single-carrier FDMA (SC-FDMA), and the like.

As shown in Figure 1A, the communications system 100 may include wireless transmit/receive units (WTRUs) 102a, 102b, 102c, 102d, a radio access network (RAN) 104, a core network 106, a public switched telephone network (PSTN) 108, the Internet 110, and other networks 112, though it will be appreciated that the disclosed embodiments contemplate any number of WTRUs, base stations, networks, and/or network elements. Each of the WTRUs 102a, 102b, 102c, 102d may be any type of device configured to operate and/or communicate in a wireless environment. By way of example, the WTRUs 102a, 102b, 102c, 102d may be configured to transmit and/or receive wireless signals and may include user equipment (UE), a mobile station, a fixed or mobile subscriber unit, a pager, a cellular telephone, a personal digital assistant (PDA), a smartphone, a laptop, a netbook, a personal computer, a wireless sensor, consumer electronics, and the like.

The communications systems 100 may also include a base station 114a and a base station 114b. Each of the base stations 114a, 114b may be any type of device configured to wirelessly interface with at least one of the WTRUs 102a, 102b, 102c, 102d to facilitate access to one or more communication networks, such as the core network 106, the Internet 110, and/or the other networks 112. By way of example, the base stations 114a, 114b may be a base transceiver station (BTS), a Node-B an evolved Node-B (eNB), a Home Node-B (HNB), a Home eNB (HeNB), a site controller, an access point (AP), a wireless router, and the like. While the base stations 114a, 114b are each depicted as a single element, it will be appreciated that the base stations 114a, 114b may include any number of interconnected base stations and/or network elements.

The base station 114a may be part of the RAN 104, which may also include other base stations and/or network elements (not shown), such as a base station controller (BSC), a radio network controller (RNC), relay nodes, and the like. The base station 114a and/or the base station 114b may be configured to transmit and/or receive wireless signals within a particular geographic region, which may be referred to as a cell (not shown). The cell may further be divided into cell sectors. For example, the cell associated with the base station 114a may be divided into three sectors. Thus, in one embodiment, the base station 114a may include three transceivers, i.e., one for each sector of the cell. In another embodiment, the base station 114a may employ multiple-input multiple output (MIMO) technology and, therefore, may utilize multiple transceivers for each sector of the cell.

The base stations 114a, 114b may communicate with one or more of the WTRUs 102a, 102b, 102c, 102d over an air interface 116, which may be any suitable wireless communication link *(e.g.,* radio frequency (RF), microwave, infrared (IR), ultraviolet (UV), visible light, and the like). The air interface 116 may be established using any suitable radio access technology (RAT).

More specifically, as noted above, the communications system 100 may be a multiple access system and may employ one or more channel access schemes, such as CDMA, TDMA, FDMA, OFDMA, SC-FDMA, and the like. For example, the base station 114a in the RAN 104 and the WTRUs 102a, 102b, 102c may implement a radio technology such as Universal Mobile Telecommunications System (UMTS) Terrestrial Radio Access (UTRA), which may establish the air interface 116 using wideband CDMA (WCDMA). WCDMA may include communication protocols such as High-Speed Packet Access (HSPA) and/or Evolved HSPA (HSPA+). HSPA may include High-Speed Downlink Packet Access (HSDPA) and/or High-Speed Uplink Packet Access (HSUPA).

In another embodiment, the base station 114a and the WTRUs 102a, 102b, 102c may implement a radio technology such as Evolved UMTS Terrestrial Radio Access (E-UTRA), which may establish the air interface 116 using Long Term Evolution (LTE) and/or LTE-Advanced (LTE-A).

In other embodiments, the base station 114a and the WTRUs 102a, 102b, 102c may implement radio technologies such as IEEE 802.16 (i.e., Worldwide Interoperability for Microwave Access (WiMAX)), CDMA2000, CDMA2000 1X, CDMA2000 EV-DO, Interim Standard 2000 (IS-2000), Interim Standard 95 (IS-95), Interim Standard 856 (IS-856), Global System for Mobile communications (GSM), Enhanced Data rates for GSM Evolution (EDGE), GSM EDGE RAN (GERAN), and the like.

The base station 114b in Figure 1A may be a wireless router, HNB, HeNB, or AP, for example, and may utilize any suitable RAT for facilitating wireless connectivity in a localized area, such as a place of business, a home, a vehicle, a campus, and the like. In one embodiment, the base station 114b and the WTRUs 102c, 102d may implement a radio technology such as IEEE 802.11 to establish a wireless local area network (WLAN). In another embodiment, the base station 114b and the WTRUs 102c, 102d may implement a radio technology such as IEEE 802.15 to establish a wireless personal area network (WPAN). In yet another embodiment, the base station 114b and the WTRUs 102c, 102d may utilize a cellular-based RAT *(e.g.,* WCDMA, CDMA2000, GSM, LTE, LTE-A, and the like) to establish a picocell or femtocell. As shown in Figure 1A, the base station 114b may have a direct connection to the Internet 110. Thus, the base station 114b may not be required to access the Internet 110 via the core network 106.

The RAN 104 may be in communication with the core network 106, which may be any type of network configured to provide voice, data, applications, and/or voice over internet protocol (VoIP) services to one or more of the WTRUs 102a, 102b, 102c, 102d. For example, the core network 106 may provide call control, billing services, mobile location-based services, pre-paid calling, Internet connectivity, video distribution, and the like, and/or perform high-level security functions, such as user authentication. Although not shown in Figure 1A, it will be appreciated that the RAN 104 and/or the core network 106 may be in direct or indirect communication with other RANs that employ the same RAT as the RAN 104 or a different RAT. For example, in addition to being connected to the RAN 104, which may be utilizing an E-UTRA radio technology, the core network 106 may also be in communication with another RAN (not shown) employing a GSM radio technology.

The core network 106 may also serve as a gateway for the WTRUs 102a, 102b, 102c, 102d to access the PSTN 108, the Internet 110, and/or other networks 112. The PSTN 108 may include circuit-switched telephone networks that provide plain old telephone service (POTS). The Internet 110 may include a global system of interconnected computer networks and devices that use common communication protocols, such as the transmission control protocol (TCP), user datagram protocol (UDP) and the internet protocol (IP) in the TCP/IP suite. The networks 112 may include wired or wireless communications networks owned and/or operated by other service providers. For example, the networks 112 may include another core network connected to one or more RANs, which may employ the same RAT as the RAN 104 or a different RAT.

Some or all of the WTRUs 102a, 102b, 102c, 102d in the communications system 100 may include multi-mode capabilities, i.e., the WTRUs 102a, 102b, 102c, 102d may include multiple transceivers for communicating with different wireless networks over different wireless links. For example, the WTRU 102c shown in Figure 1A may be configured to communicate with the base station 114a, which may employ a cellular-based radio technology, and with the base station 114b, which may employ an IEEE 802 radio technology.

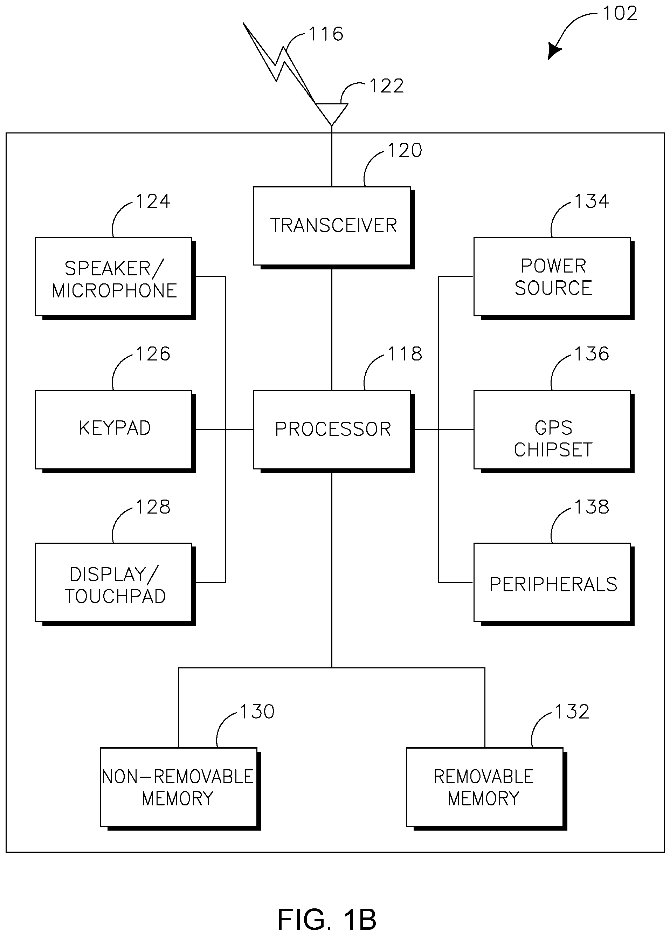

Figure 1B shows an example WTRU 102 that may be used within the communications system 100 shown in Figure 1A. As shown in Figure 1B, the WTRU 102 may include a processor 118, a transceiver 120, a transmit/receive element , *(e.g.,* antenna) 122, a speaker/microphone 124, a keypad 126, a display/touchpad 128, a non-removable memory 130, a removable memory 132, power source 134, a global positioning system (GPS) chipset 136, and peripherals 138. It will be appreciated that the WTRU 102 may include any sub-combination of the foregoing elements while remaining consistent with an embodiment.

The processor 118 may be a general purpose processor, a special purpose processor, a conventional processor, a digital signal processor (DSP), a microprocessor, one or more microprocessors in association with a DSP core, a controller, a microcontroller, an Application Specific Integrated Circuit (ASIC), a Field Programmable Gate Array (FPGA) circuit, an integrated circuit (IC), a state machine, and the like. The processor 118 may perform signal coding, data processing, power control, input/output processing, and/or any other functionality that enables the WTRU 102 to operate in a wireless environment. The processor 118 may be coupled to the transceiver 120, which may be coupled to the transmit/receive element 122. While Figure 1B depicts the processor 118 and the transceiver 120 as separate components, the processor 118 and the transceiver 120 may be integrated together in an electronic package or chip.

The transmit/receive element 122 may be configured to transmit signals to, or receive signals from, a base station (e.g., the base station 114a) over the air interface 116. For example, in one embodiment, the transmit/receive element 122 may be an antenna configured to transmit and/or receive RF signals. In another embodiment, the transmit/receive element 122 may be an emitter/detector configured to transmit and/or receive IR, UV, or visible light signals, for example. In yet another embodiment, the transmit/receive element 122 may be configured to transmit and receive both RF and light signals. The transmit/receive element 122 may be configured to transmit and/or receive any combination of wireless signals.

In addition, although the transmit/receive element 122 is depicted in Figure 1B as a single element, the WTRU 102 may include any number of transmit/receive elements 122. More specifically, the WTRU 102 may employ MIMO technology. Thus, in one embodiment, the WTRU 102 may include two or more transmit/receive elements 122 *(e.g.,* multiple antennas) for transmitting and receiving wireless signals over the air interface 116.

The transceiver 120 may be configured to modulate the signals that are to be transmitted by the transmit/receive element 122 and to demodulate the signals that are received by the transmit/receive element 122. As noted above, the WTRU 102 may have multi-mode capabilities. Thus, the transceiver 120 may include multiple transceivers for enabling the WTRU 102 to communicate via multiple RATs, such as UTRA and IEEE 802.11, for example.

The processor 118 of the WTRU 102 may be coupled to, and may receive user input data from, the speaker/microphone 124, the keypad 126, and/or the display/touchpad 128 *(e.g.,* a liquid crystal display (LCD) display unit or organic light-emitting diode (OLED) display unit). The processor 118 may also output user data to the speaker/microphone 124, the keypad 126, and/or the display/touchpad 128. In addition, the processor 118 may access information from, and store data in, any type of suitable memory, such as the non-removable memory 130 and/or the removable memory 132. The non-removable memory 130 may include random-access memory (RAM), read-only memory (ROM), a hard disk, or any other type of memory storage device. The removable memory 132 may include a subscriber identity module (SIM) card, a memory stick, a secure digital (SD) memory card, and the like. In other embodiments, the processor 118 may access information from, and store data in, memory that is not physically located on the WTRU 102, such as on a server or a home computer (not shown).

The processor 118 may receive power from the power source 134, and may be configured to distribute and/or control the power to the other components in the WTRU 102. The power source 134 may be any suitable device for powering the WTRU 102. For example, the power source 134 may include one or more dry cell batteries *(e.g.,* nickel-cadmium (NiCd), nickel-zinc (NiZn), nickel metal hydride (NiMH), lithium-ion (Li-ion), and the like , solar cells, fuel cells, and the like.

The processor 118 may also be coupled to the GPS chipset 136, which may be configured to provide location information *(e.g.,* longitude and latitude) regarding the current location of the WTRU 102. In addition to, or in lieu of, the information from the GPS chipset 136, the WTRU 102 may receive location information over the air interface 116 from a base station *(e.g.,* base stations 114a, 114b) and/or determine its location based on the timing of the signals being received from two or more nearby base stations. The WTRU 102 may acquire location information by way of any suitable location-determination method while remaining consistent with an embodiment.

The processor 118 may further be coupled to other peripherals 138, which may include one or more software and/or hardware modules that provide additional features, functionality and/or wired or wireless connectivity. For example, the peripherals 138 may include an accelerometer, an e-compass, a satellite transceiver, a digital camera (for photographs or video), a universal serial bus (USB) port, a vibration device, a television transceiver, a hands free headset, a Bluetooth® module, a frequency modulated (FM) radio unit, a digital music player, a media player, a video game player module, an Internet browser, and the like.

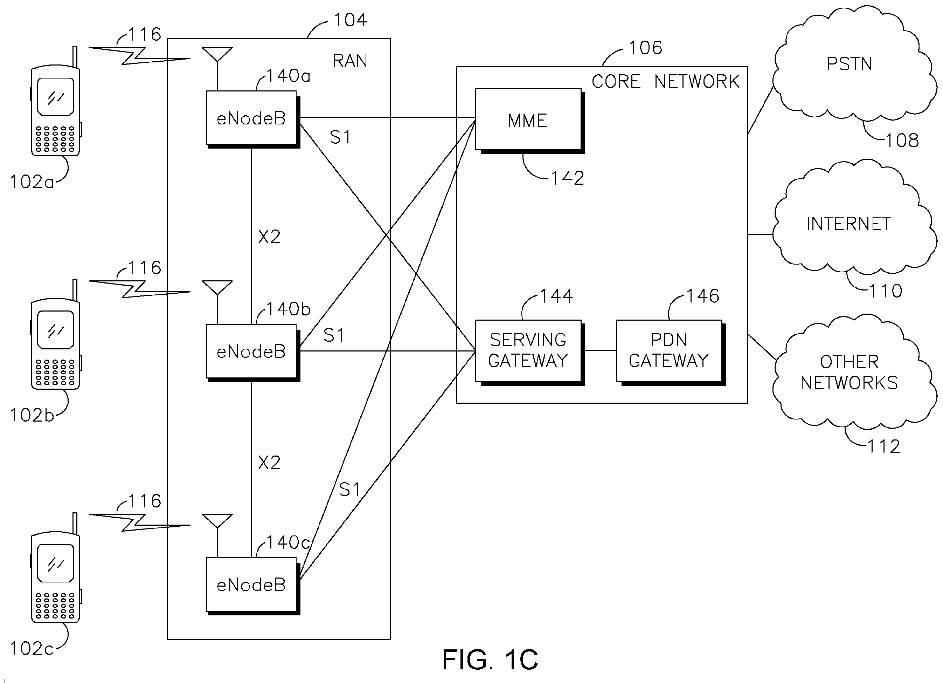

Figure 1C shows an example RAN 104 and an example core network 106 that may be used within the communications system 100 illustrated in Figure 1A. As noted above, the RAN 104 may employ an E-UTRA radio technology to communicate with the WTRUs 102a, 102b, 102c over the air interface 116. The RAN 104 may also be in communication with the core network 106.

The RAN 104 may include eNBs 140a, 140b, 140c, though it will be appreciated that the RAN 104 may include any number of eNBs while remaining consistent with an embodiment. The eNBs 140a, 140b, 140c may each include one or more transceivers for communicating with the WTRUs 102a, 102b, 102c over the air interface 116. In one embodiment, the eNBs 140a, 140b, 140c may implement MIMO technology. Thus, the eNB 140a, for example, may use multiple antennas to transmit wireless signals to, and receive wireless signals from, the WTRU 102a.

Each of the eNBs 140a, 140b, 140c may be associated with a particular cell (not shown) and may be configured to handle radio resource management decisions, handover decisions, scheduling of users in the uplink and/or downlink, and the like. As shown in Figure 1C, the eNBs 140a, 140b, 140c may communicate with one another over an X2 interface.

The core network 106 shown in Figure 1C may include a mobility management gateway (MME) 142, a serving gateway 144, and a packet data network (PDN) gateway 146. While each of the foregoing elements are depicted as part of the core network 106, it will be appreciated that any one of these elements may be owned and/or operated by an entity other than the core network operator.

The MME 142 may be connected to each of the eNBs 142a, 142b, 142c in the RAN 104 via an S1 interface and may serve as a control node. For example, the MME 142 may be responsible for authenticating users of the WTRUs 102a, 102b, 102c, bearer activation/deactivation, selecting a particular serving gateway during an initial attach of the WTRUs 102a, 102b, 102c, and the like. The MME 142 may also provide a control plane function for switching between the RAN 104 and other RANs (not shown) that employ other radio technologies, such as GSM or WCDMA.

The serving gateway 144 may be connected to each of the eNode Bs 140a, 140b, 140c in the RAN 104 via the S1 interface. The serving gateway 144 may generally route and forward user data packets to/from the WTRUs 102a, 102b, 102c. The serving gateway 144 may also perform other functions, such as anchoring user planes during inter-eNode B handovers, triggering paging when downlink data is available for the WTRUs 102a, 102b, 102c, managing and storing contexts of the WTRUs 102a, 102b, 102c, and the like.

The serving gateway 144 may also be connected to the PDN gateway 146, which may provide the WTRUs 102a, 102b, 102c with access to packet-switched networks, such as the Internet 110, to facilitate communications between the WTRUs 102a, 102b, 102c and IP-enabled devices.

The core network 106 may facilitate communications with other networks. For example, the core network 106 may provide the WTRUs 102a, 102b, 102c with access to circuit-switched networks, such as the PSTN 108, to facilitate communications between the WTRUs 102a, 102b, 102c and traditional land-line communications devices. For example, the core network 106 may include, or may communicate with, an IP gateway *(e.g.,* an IP multimedia subsystem (IMS) server) that serves as an interface between the core network 106 and the PSTN 108. In addition, the core network 106 may provide the WTRUs 102a, 102b, 102c with access to the networks 112, which may include other wired or wireless networks that are owned and/or operated by other service providers.

Although not shown in Figure 1C, it will be appreciated that the RAN 104 may be connected to other ASNs and the core network 106 may be connected to other core networks. The communication link between the RAN 104 the other ASNs may be defined as an R4 reference point, which may include protocols for coordinating the mobility of the WTRUs 102a, 102b, 102c between the RAN 104 and the other ASNs. The communication link between the core network 106 and the other core networks may be defined as an R5 reference, which may include protocols for facilitating interworking between home core networks and visited core networks.

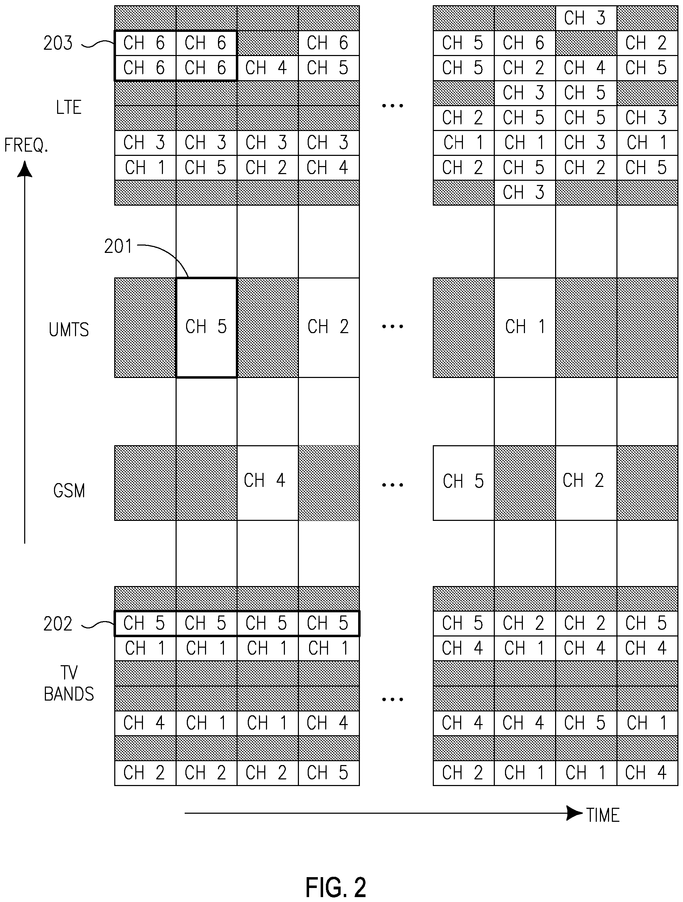

Figure 2 shows an example scenario of a usage pattern of the licensed spectra in time and frequency bands for GSM, LTE, WCDMA and TV bands. In one embodiment, a scheme is provided for communication in a WLAN or an ad hoc, wireless neighborhood area network (WNAN), whereby spectrum is assigned to each communication link based on coordination among users, thus eliminating contention over the air. All the devices can communicate simultaneously with each other, oblivious to the presence of other devices in the network, by making use of under-utilized portions of the wireless frequency spectrum. For example, this embodiment uses portions of the frequency spectrum allocated to licensed operators that are not necessarily used optimally and the usage characteristics of the spectrum change dynamically in time, frequency and geographic location.

With reference to Figure 2, the shaded areas of the licensed spectrum are the occupied regions used by the primary users of the spectrum at a particular time and frequency. The remaining spectrum regions are unused by the primary users and could potentially be used for communication by unlicensed secondary users (without causing interference to any primary user). For example, the available TV bands may be unlicensed white spaces. Table 1 shows an example of an assignment of the remaining regions to secondary users, identified as channels CH 1, CH 2, CH 3, CH 4, CH 5 and CH 6, with allocations to pairs of network Nodes A, B and C, and a Spectrum Manager. The Spectrum Manager is responsible for assignment of channels to secondary users, and will be described with detail further below.

**TABLE 1**

| **Channel** | **User pair** |
|---|---|
| CH 1 | Node A / Node C |
| CH 2 | Spectrum Manager / Node A |
| CH 3 | Spectrum Manager / Node C |
| CH 4 | Spectrum Manager / Node B |
| CH 5 | Node A / Node B |
| CH 6 | Node B / Node C |

Distribution of the unoccupied spectrum as shown in Figure 2 permits the spectrum to be efficiently utilized and may provide additional bandwidth for communication of devices. The spectrum manager may select channel assignment for a particular user pair, such as Node A/ Node B (CH 5) in chunks of frequency, such as at region 201, or in chunks of time, such as at region 202. Also, a user pair assignment may be selected as a combination of time and frequency chunks, as shown for user pair Node B/ Node C (CH 6) in region 203. While the frequency regions shown in Figure 2 are for licensed spectra, this embodiment is not limited to licensed spectra, and may extend to unlicensed bands, such as IEEE 802.11x technologies, where a spectrum can be shared in a non-malicious co-existing fashion.

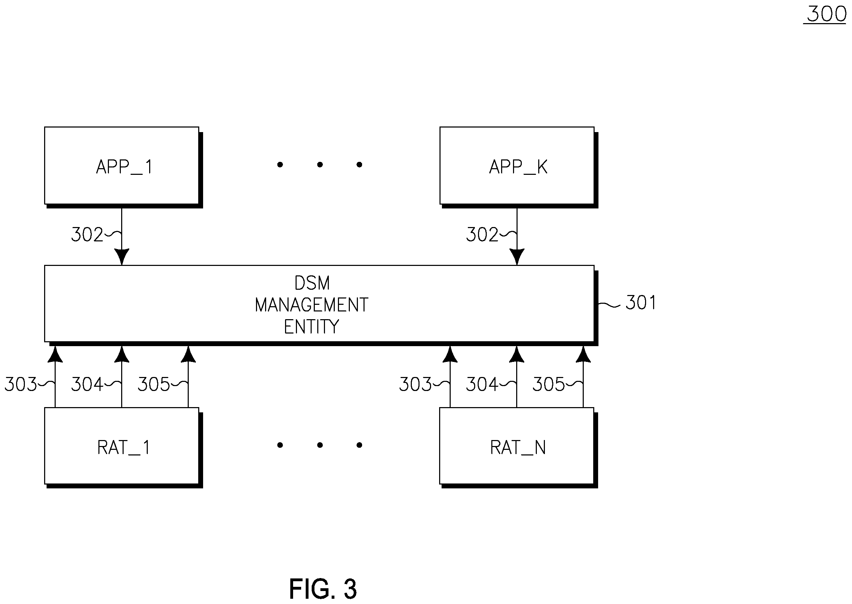

Figure 3 shows a block diagram of a protocol stack model for a spectrum manager 300 comprising a dynamic spectrum management (DSM) management entity 301 that receives QoS requirements 302 from applications APP_1 - APP_K, and receives advertised capabilities 303 from multiple radio access technologies (RATs) RAT_1 - RAT_N via a plurality of multi-RAT transceivers. The DSM management entity 301 may also receive indications of availability 304 and channel quality measurements 305 from each of the supported RATs, RAT_1- RAT_N. The DSM management entity 301 may perform call admission control, and map applications to an appropriate vector of RATs. The DSM management entity 301 provides abstraction and methodology to allow seamless dynamic update of RAT mapping with changing channel conditions and availability.

The spectrum manager 300 may act as a spectrum broker, sensing the wireless spectrum for spectrum holes continuously in time and frequency, and/or fusing the spectrum sensing reports fed back to it from internal sensing functionality and/or other nodes in the network, and assigning independent spectrum to each wireless link. The spectrum manager 300 may employ smart radio resource management schemes, which use the sensing information to assign different spectra based on the service and user priorities.

Architecturally, these functions of the DSM management entity 301 may be distributed or centralized or a mix of both. A sensing fusion unit for fusing the spectrum sensing reports may or may not be necessary and the functions of the spectrum manager 300 may be distributed in different places in the protocol stack based on the context of the use case, as will be described below.

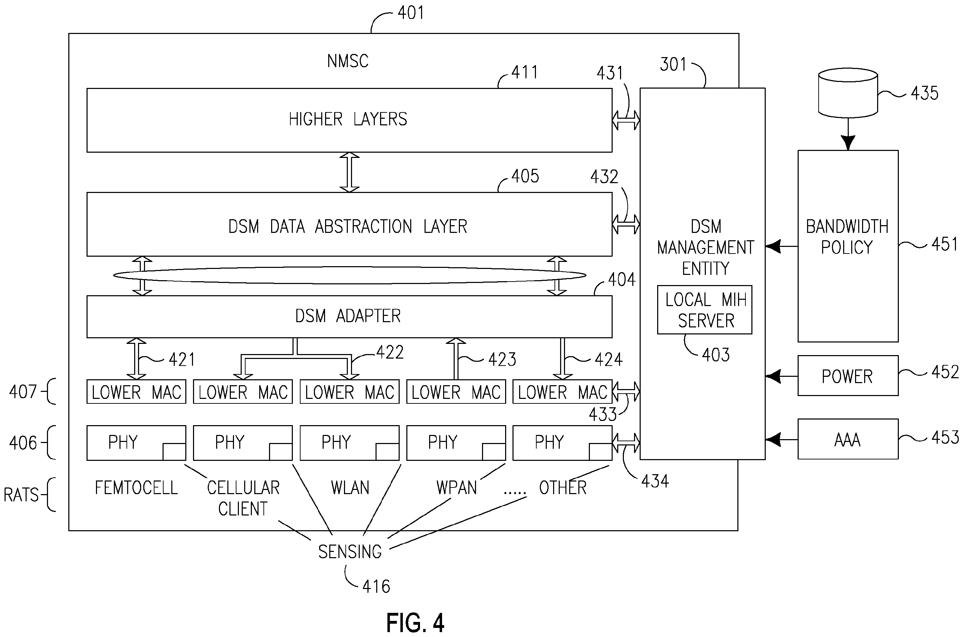

Figure 4 shows an example block diagram of a Neighborhood Multimedia Sharing Controller (NMSC) 401, which includes the DSM management entity 301, along with a protocol architecture to support DSM functionality. The protocol stack includes higher layers 411, a DSM abstraction layer 405, a DSM adapter 404, lower MAC layers 407, and PHY layers 406. The DSM management entity 301 may define sensing requirements, collect measurements, perform data fusion, control network protocols, and implement management algorithms in order to inform the various layers of higher level policies. For example, the list of allowable white spaces (spectrum bands) for secondary users are passed from the DSM Management Entity 301 to the PHY layers 406 across interface 434 so that sensing 416 takes place only in permissible regions, minimizing interference with primary users in occupied licensed bands. Similarly, the DSM management entity 301 may inform other layers *(e.g.,* lower MAC layers 407 via interface 433, and the DSM data abstraction layer 405 via interface 432) regarding the available unlicensed spectrum. Higher layer protocols may be used to transport any relevant control and signaling information to client devices (end users) and peer devices (other NMSCs). As shown, the DSM management entity 301 communicates with higher layers 411 using interface 431 to exchange QoS requirements for example.

The control plane of the NMSC 401 includes divided MAC functionality between the lower MAC layers 407 and a DSM adapter 404 that provides a higher MAC layer functionality. The DSM adapter 404 supports spectrum selection and aggregation by providing adaptation needed to tie RAT-specific PHY layers 406 and lower level MAC layers 407 from various RATs and/or spectrum bands to the higher layers 411. The lower MAC layers 407 are provided to support access control for the each of the RATs individually. The interaction between the DSM adapter 404 and the lower MAC layers 407 is RAT-based and multi-RAT based as shown by data flows 421-424. The DSM adapter 404 may operate a two-way data flow using a single RAT, as shown by data flow 421 utilizing the femtocell capability. The DSM adapter 404 is also capable of multi-RAT control as shown by the data flow 422 utilizing a cellular RAT and a WLAN RAT to enhance spectrum mobility and occupancy. As another example, the DSM adapter 404 may utilize a different RAT for uplink and downlink, as shown by data flows 423 and 424, where an uplink may be allocated to a Bluetooth WPAN RAT and the downlink RAT may employ visible light communications.

A DSM data abstraction layer 405 performs a mapping function between higher layers 411 and the DSM adapter 404, effectively hiding the DSM-specific details from the higher layers 411.

The DSM management entity 301 may make DSM decisions based on bandwidth tracking information provided by a bandwidth policy entity 451. An active RAT database 435 may be used to maintain a list of the RATs which are currently providing service to various devices. The bandwidth policy 451 may update and read the active RAT database 435 and to identify white space and other unlicensed spectra based on RAT-based policy, and provide such information to the DSM Management Entity 301. The DSM management entity 301 may also make DSM decisions based on monitored battery life input from a power tracker 452, and security parameters from an Authentication, Authorization, and Accounting (AAA) interface 453. The DSM management entity 301 includes a local Media Independent Handover (MIH) server function 403 that may use the measurement information from individual RATs as well as additional information from centralized information servers to initiate a handover of a device from one RAT to another. For example, a handover may be initiated in a case of a current RAT becomes unacceptable or unavailable.

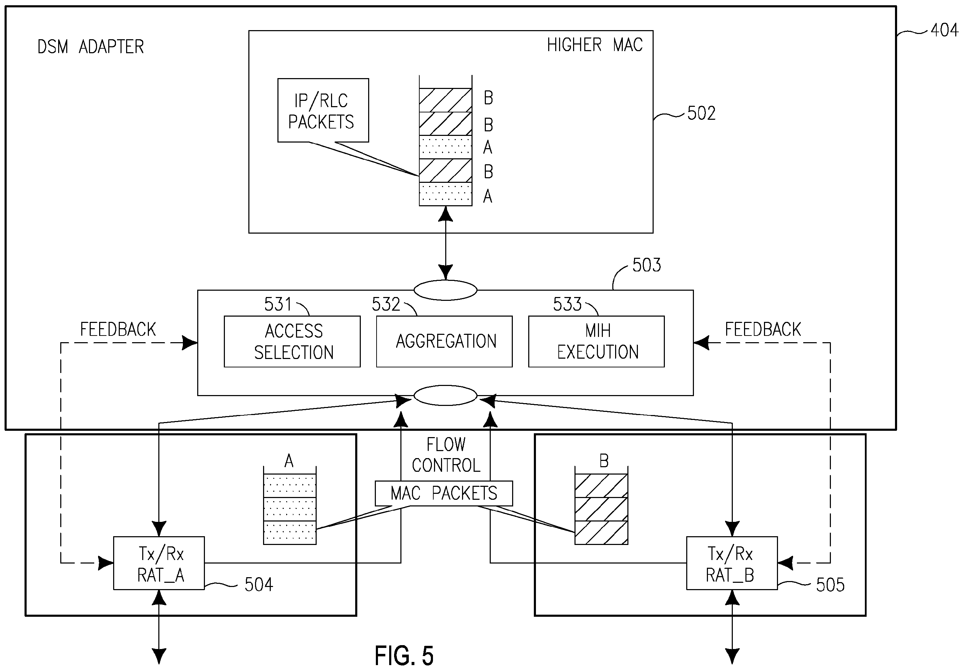

Figure 5 shows an example block diagram of the DSM adapter 404. In this example, IP/RLC packets intended for two different RATs, RAT_A and RAT_B, are received by the higher MAC layer 502. The DSM adapter 404 may separate the packets as A packets intended for RAT_A, and B packets intended for RAT_B, using access selection function 531, an aggregation function 532, and may create lower level MAC layer packets A and B for each of the supported RAT_A and RAT_B, stored in MAC buffers of lower MAC/PHY layers 504, 505. These A and B packets are eventually converted to PHY layer data for transmission. In addition to control of the separation of data into RAT-based streams, the DSM adapter 404 may control the data flow in accordance with the feedback coming from the lower MAC/PHY layer 504 for RAT A, and the lower MAC/PHY layer 505, so as not to overwhelm or underutilize the available resources. Lastly, feedback is used to make decisions on RAT assignment for the various services. For example, if a high priority service was experiencing unacceptable performance on WLAN, the DSM adapter 404 would adjust the data flows accordingly. For example, the data flow may be transferred from one RAT to another RAT having better performance. It should be noted that the aforementioned functionality is applicable in the receive direction as well (i.e., packets received from various RATs may transparently pass through to the higher MAC layer 502, where they are combined and sent to the higher layers 411.

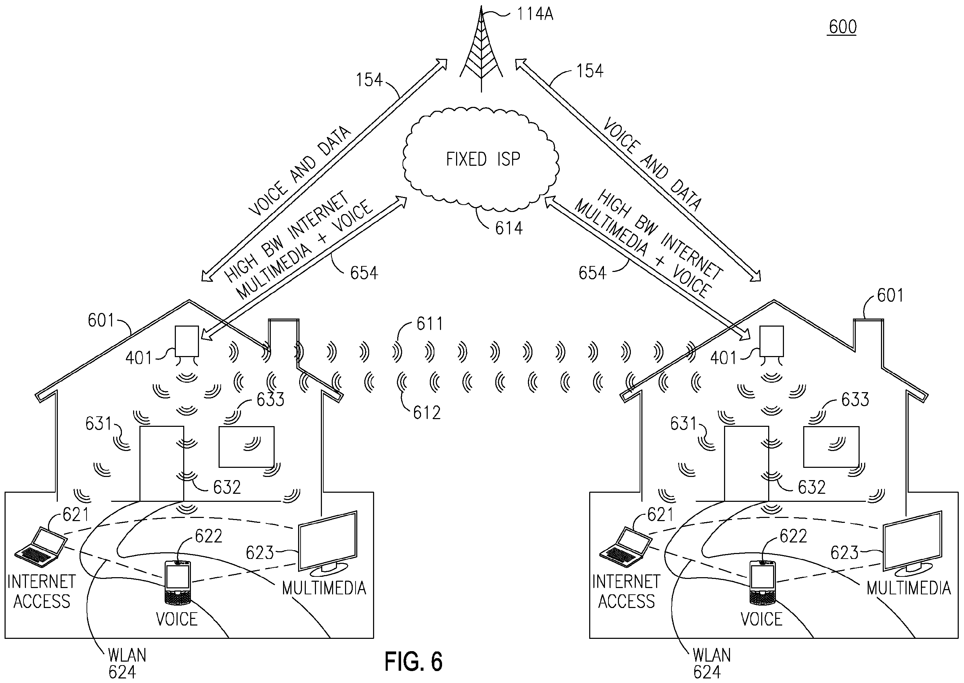

The following description is of various possible applications and configurations for the NMSC 401. Figure 6 shows an example ad hoc neighborhood network 600, in which each home 601 has multiple subscriber devices trying to access one or more of multimedia and infotainment services: voice communication devices 622 *(e.g.,* cell phones, VoIP phones), internet access devices 621 *(e.g.,* laptops, handheld devices, and internet-enabled appliances), and multimedia devices 623 *(e.g.,* multiple TV screens, laptops, security cameras, handheld devices). An NMSC 401 is installed in each home 601 to distribute voice and data via a wireless connection 154 to the cellular macro base station 114A, and/or a high bandwidth internet and multimedia session via a wire/cable/optical fiber connection to a fixed ISP 614.

The NMSC 401 is enabled as an access point or gateway to provide a wireless local area network 624 in the home 601 and may deliver multimedia service to the devices 621, 622, 623 over one or more of the multiple RATs 631, 632, 633 *(e.g.* one or more of the IEEE 802.11x wireless communication standards) as shown in Figure 6. As shown in Figure 4, the NMSC 401 may also be enabled to operate as a femtocell having a protocol stack for a femtocell RAT, and thus may deliver voice and data service 154 directly to the home devices 621, 631, 641.

The base station 114A may provide each home in the ad hoc neighborhood network 600 an independent dedicated bandwidth, dynamically allocated based on usage. Where multiple homes in the ad hoc neighborhood network 600 are subscribed to a fixed ISP 614, the fixed ISP 614 may find it more efficient to transmit a subset of the channels to each home in the neighborhood directly while the homes share the channels among themselves in transmissions 611, 612 using the DSM enhanced NMSCs 401 wirelessly via available spectrum. Accordingly, a mesh network may be formed by the ad hoc neighborhood network 600, which can support all the services simultaneously to each home 601, by alleviating the burden of beaming all channels simultaneously to each and every home 601, yet providing acceptable QoS to the subscribers.

Since many homes 601 in a neighborhood could be accessing the same multimedia service simultaneously at any given time, the cellular operator could beam the service 154 to one or more homes 601, which can be relayed by NMSCs 401 on relay transmissions 611, 612. This offloads the backbone network traffic. The DSM management entity 301 in the NMSCs 401 may select the RAT for inter-NMSC communications 611, 612 based on various factors, such as pathloss, transmit power, interference, and the like. One option for inter-NMSC communication 611, 612 may include selection of a femtocell RAT for a master NMSC 401, and cellular client RATs for the other NMSCs 401, enabling access to the cellular client interface of subscribed neighbor NMSCs 401. Having the relay function of the NMSC 401 available enables a service provider 114A or 614A to send only a subset of the multimedia services to each home 601 in a neighborhood, and relying on the NMSCs 401 of each home 601 to relay the information to the others in the neighborhood, thus reducing infrastructure network load.

With a mesh network formed in the ad hoc neighborhood network 600, the two-way transmissions 611, 612 may also support multiplayer gaming across homes 601. Another example use case for the formed mesh network is that a home 601 user may share streaming video with one or multiple homes 601 simultaneously. Another advantage is that homes 601 in the ad hoc neighborhood network 600 could share media libraries with each other.

Additionally, the ad hoc neighborhood network 600 could act as a medium for neighborhood watch, enabling a safe environment. For example, where each home has at least one security camera connected to the NMSC 401 as part of its home network, the video stream of the camera can be accessible directly by one or more neighbors authorized for access instead of routing the video through the operator's network.

As a variation of this embodiment, the ad hoc neighborhood network 600 may be extended to a larger scale, forming an enterprise in which wireless access is used to communicate locally within a facility or to communicate with another external facility through an infrastructure network, each facility using the DSM-enhanced NMSC 401 acting as a wireless access point. This eliminates the need, as found in typical large enterprises, to connect the access points using a wired backbone that is expensive in terms of installation and maintenance. In an example implementation, the NMSC 401 behaves as an access point providing instant connectivity locally to the users. Each enterprise NMSC 401 may be connected to each other wirelessly using the DSM functionality. Such a DSM-enhanced enterprise provides an availability of large amounts of bandwidth and the ability to provide guaranteed QoS for each connection, and would be useful for high quality video conferencing across a multi-building campus in large enterprises over the expanded wireless NMSC network 600.

Some advantages of a DSM-enabled NMSC 401 controlling a communication network include a multi-fold increase in system capacity by opening up access to the multiple available spectra for communication, and fewer blocked calls from higher availability of spectrum resources. Also, the NMSC 401 may automatically select appropriate spectrum allocation to minimize transmit power, and maximize bandwidth automatically, for any coverage radius of the NMSC 401. The NMSC 401 may guarantee QoS to the user/application for any service or user requirements, since the spectrum and bandwidth (continuous or discontinuous) allocation decisions are based on the QoS requested by the user/application. The NMSC 401 is also capable of autonomously adapting to QoS requirements and bandwidth availability, configuring and optimizing spectrum assignments in the network by self-monitoring available spectrum, and re-assigning spectrum without need for network administration.

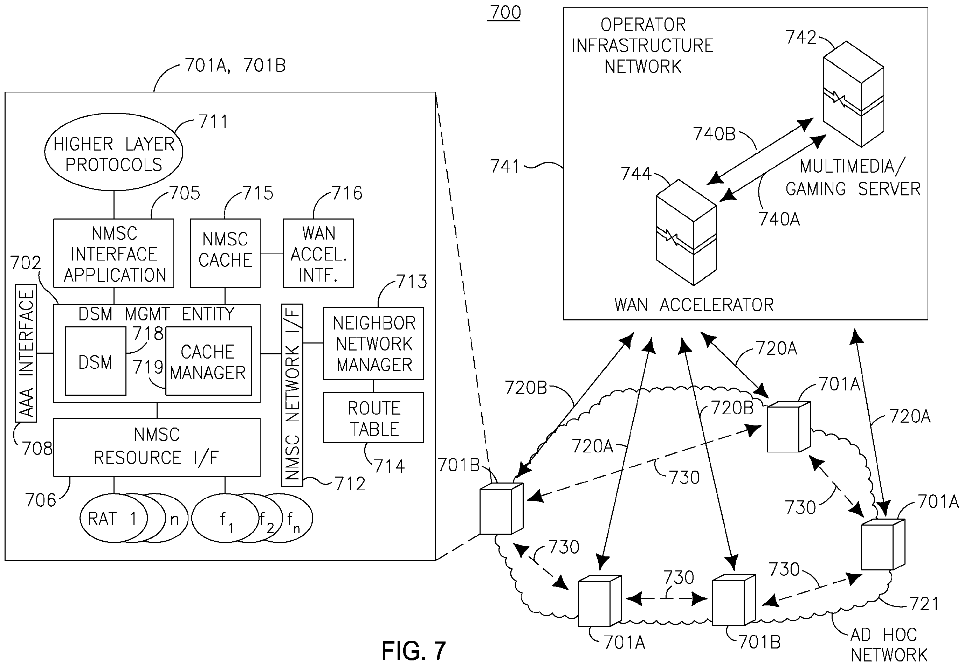

Figure 7 shows an example of a top level network 700 in which a distribution of multimedia services is provided from an operator infrastructure network 741 to an ad hoc network 721. In this example, the ad hoc network 721 comprises multiple NMSC nodes 701A, 701B, each associated with a respective wireless home area network, where two sets of home subscriber users are accessing two different multimedia sessions A and B. A first set of NMSC nodes 701A are designated to provide service to home subscriber users of media sessions A transmitted on multimedia streams 720A, while a second set of NMSC nodes 701B receive and distribute media sessions B to associated subscriber users from multimedia streams 720B. The provider of the multimedia sessions A and B is an operator infrastructure network 741 that includes a wireless access network (WAN) accelerator 744 and a multimedia/gaming server 742. The multimedia sessions A and B originate from the multimedia/gaming server 742, as multimedia streams 740A, 740B, respectively. For simplicity, two provisional multimedia/gaming streams 740A, 740B from multimedia/gaming server are shown, however additional streams could be distributed from the multimedia/gaming server 742 *(e.g.,* n total streams for n sessions to respective sets of NMSCs 701A, 701B...701n may be delivered) to the network 721.

A detailed block representation of each of the NMSC nodes 701A, 701B is also shown in Figure 7, in which additional interface entities are included to enhance multimedia services distribution in the network 721. The following individual entities/functional blocks as described below with respect to the NMSC nodes 701A, 701B, may be present in every NMSC node 701A, 701B of the network 721. Alternatively, some or all of the entities may be independent common physical devices in the ad hoc network 721, or functional blocks within the operator's network 741.

The NMSC nodes 701A, 701B includes an AAA interface 708 for facilitating use of operator resources for security, such as controlling user access to multimedia at the wireless home area network 624 level (Figure 6) and/or the ad hoc network 721 level.

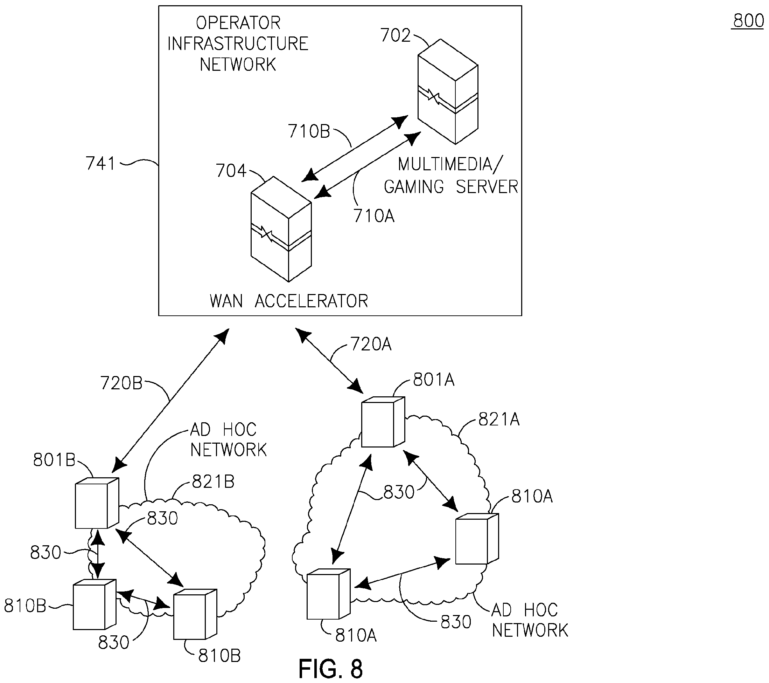

An NMSC network interface 712 may handle the Layer 3 protocols involving operation of the ad hoc neighborhood network, including routing of data packets between NMSC nodes 701A, 701B, in conjunction with a neighborhood network manager entity 713 and route table 714. The NMSC network interface 712 may be implemented as a module which acts a proxy to convert and to interpret signals between the DSM management entity 702 and the neighbor network manager 713. The neighbor network manager 713 is mainly responsible for ad hoc network cognition involving NMSC node 701A, 701B registration, neighbor discovery and periodic neighbor update processes, which is described in further detail below with reference to Figure 8. The route table 714 may be implemented as a database of neighbor NMSC node 701A, 701B IDs and their corresponding routing information from whichever NMSC node 701A, 701B is presently acting as a source NMSC node.

An NMSC resource interface 706 may implement Layer 2 and Layer 1 operations required to utilize the available RAT resources RAT_1-RAT_n, and sensing on frequencies f1 - fn, which include the white space or other unlicensed frequencies. For example, it may provide higher and lower MAC entities for allowing splitting of data across multiple RATs, as described above for lower MAC layers 407, and PHY layers 406.

A WAN accelerator interface 716 is configured to interface with the WAN accelerator 744, and may manage caching operations, such as those used to store and forward data streams from the operator's application servers 742 to the other designated NMSCs, stored in an NMSC cache 715. The NMSC node 701A, 701B includes a DSM management entity 702 responsible for spectrum management and for caching information which may need to be passed onto other NMSC nodes. The DSM management entity 702 may use database information to know which RATs and/or frequencies are valid for primary and secondary usage. The DSM management entity 702 has DSM functionality 718 like that of the DSM management entity 301 described above, and is additionally enhanced with a cache manager 719 to process the caching operations performed by the WAN accelerator 716 in conjunction with the DSM functionality 718.

An NMSC application interface 705 may handle interaction with higher layer protocols 711 to supply aggregated data for high rate applications. The NMSC application interface 705 may provide abstraction for application layers to be transparent to dynamic updates in the RAT assignment/mapping. For example, the NMSC application interface 705 may provide a socket-API that allows the IP socket to be agnostic of the RAT that is being used.

In this first example network 700, while all nodes 701A and 701B are directly connected to the network 741 by receiving individual streams 720A and 720B, each node 701A, 701B uses end-to-end network resources. To optimize network resources, the NMSC nodes 701A, 701B may provide inter-connectivity 730 to any of the other NMSC nodes so that both streams 720A, 720B are accessible by any user serviced by the network 721, as an alternative to using a direct multimedia stream 720A, 720B. The inter-connectivity 730 is generated and maintained via NMSC relay functions, such as the NMSC network interface 712, depending on factors such as channel quality, which in turn depends on path loss characteristics, particularly if the 730 interface is a wireless medium.

Figure 8 shows an example network 800, a variation of the example network 700 shown in Figure 7, in which two separate ad hoc networks 821A and 821B are created, each with a primary NMSC nodes 801A, 801B. This configuration enables a peer-to-peer multimedia streaming or gaming session between cluster nodes 810A and 810B in each cluster whose subscriber users are interested in the same multimedia/gaming sessions A and B via multimedia streams 710A/720A and 710B/720B. The primary nodes 801A and 801B may be configured with the same functional elements as nodes 701A, 701B as shown in Figure 7. The clustering connections may be coordinated by the operator infrastructure network 741. Alternatively, the primary nodes 801A, 801B may coordinate the clustering based on exchanged and relayed information in the clusters 821A and 821B, with detection and recognition of common multimedia stream patterns. For example, the clustering may be handled by the NMSC network interface 712 in each NMSC node 810A, 810B using peer-to-peer communications 830. The DSM management entity 702 may select white space bands or licensed spectrum bands for the network 821A, 821B communications. The primary NMSC node 801A, 801B caches and streams the multimedia content, acting as a local WAN accelerator 704 helper node, which offloads the operator infrastructure network 741. In particular, this could significantly increase network server capacity for peer-to-peer gaming sessions.

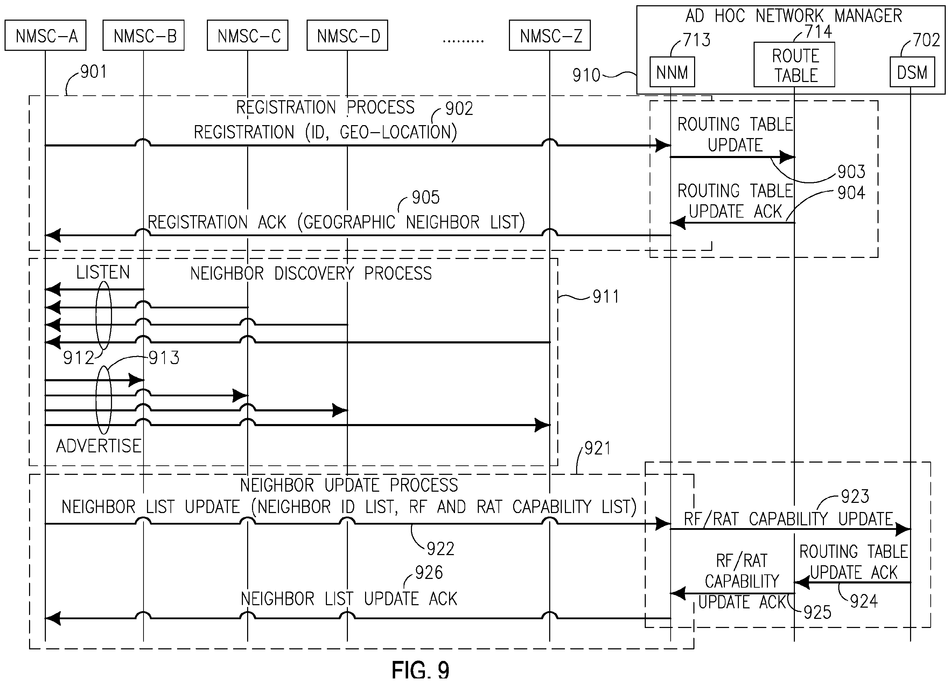

Figure 9 shows a signal diagram of a primary NMSC node 701A operating as an ad hoc network manager 910 and performing a cognition signal sequence to register a node NMSC-A in a cluster of nodes NMSC-A-NMSC-Z. In this example, the ad hoc network manager 910 uses the aforementioned functional entities NMSC network manager (NMM) 713, the route table 714, and DSM management entity 702. Alternatively, these functions may be distributed and be part of some or all of nodes NMSC-A-NMSC-Z in the network.

During a cognition phase, each of the NMSC nodes NMSC-A-NMSC-Z of the ad hoc neighborhood network may perform a registration process 901, a neighbor discovery process 911, and a neighbor update process 921. Using the node NMSC-A as an example, starting with the registration process 911, the node NMSC-A may send a registration signal 902 including information such as its device ID, geo-location *(e.g.,* GPS coordinates) to the NNM 713. The NNM 713 may authenticate the NMSC-A and may register the device with the ad hoc network. The NNM 713 may create a neighborhood network map and updates the route table 714, sending a routing table update 903 with the different possible multi-hop routes between the operator gateway and the NMSC. The route table 714 may send an acknowledgement 904 to the NNM 713 indicating receipt of the information. The NNM 713 signals a registration acknowledgement 905 back to the node NMSC-A with information containing a list of geographic neighbor devices for the node NMSC-A.

During the neighbor discovery process 911, the sensing functions 416 of node NMSC-A may listen to advertisement beacons 912 from the neighboring NMSC nodes, the beacons including device IDs, RF capability and RAT capability. The NMSC network interface 712 of node NMSC-A looks for specific IDs within the beacons as specified by the registration acknowledgement from the NNM 713. Following the listen phase 912, the node NMSC-A then sends its own advertisement beacons 913 including device ID, RF and RAT capabilities to neighboring NMSC nodes. This exchange of information during the discovery process 911 enables each NMSC node to know its neighboring NMSC nodes along with their RF capability on the respective link to each neighbor NMSC node.

During the neighbor update process 921, the node NMSC-A sends a neighbor list update 922 to the NNM 713, including a neighbor ID list, a RF capability list and a RAT capability list. The NNM 713 may send this information as an RF/RAT capability update 923 to the DSM management entity 702 where each link in the ad hoc network is associated with a bandwidth and RF span. The DSM management entity 702 may update the route table 714 so that each route is assigned characteristics such as maximum bandwidth for the route, maximum and minimum expected latency on the route, etc. The route table 714 may send an acknowledgement 925 to the NNM 713 signaling the update of route metrics. The NNM 713 may signal back a neighbor list update acknowledgement 926 back to the node NMSC-A.

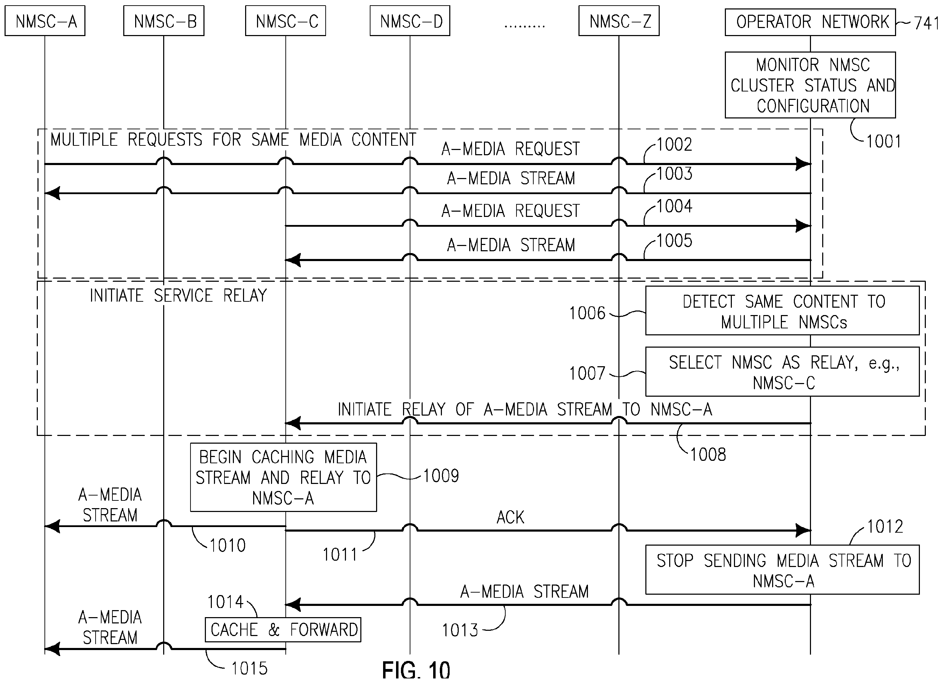

Figure 10 shows an example signal diagram for a case when clustered NMSC nodes provide optimized distribution of operator-originated media content via DSM-enabled relay functionality. In this example, the operator infrastructure network 741 may remotely coordinate the optimized content distribution within an NMSC cluster of nodes NMSC-A- NMSC-Z. In this way, each of nodes NMSC-A- NMSC-Z behaves as an edge entity of a core operator network 741. The current status/configuration of the cluster of nodes NMSC-A-NMSC-Z may be monitored 1001 by the operator network 741 by accessing the route table 714 of the ad hoc network manager 910. The current spectrum management status is based on route table 714 updates from the neighbor update process 921 and the mechanisms such as those described above with reference to Figure 9. Alternatively, the relay functionality of the ad hoc neighborhood network allows access to a route table 714 using any one or more of the nodes NMSC-A-NMSC-Z to receive and relay the route table information. Thus, the NMSC cluster status and configuration 1001 may be determined as either a centralized function or as a distributed operation.

The operator network 741 receives an A-Media request 1002 from the node NMSC-A and an A-media request 1004 from the node NMSC-C. In response, an A-Media stream 1003 is sent to the node NMSC-A, and an A-media stream 1005 is sent to the node NMSC-C. The content of the A-Media may be live or recorded, and the requests 1002, 1004 may involve time-shifted versions of the same content. The operator network 741 may detect commonality 1006 of the A-Media content to multiple NMSC nodes directly from the signaling information used to request the content, or by detecting the streaming of the same content to multiple NMSC nodes, or indirectly by methods such as Deep Packet Inspection (DPI).

Based on predetermined criteria for a number of multiple requests for the same media content, the operator network 741 identifies this media content as "popular" content in the NMSC cluster. For simplicity in this example, the predetermined criteria is two NMSC nodes requesting the same media content, however other criteria may be selected, such as detecting at least N NMSC nodes seeking the same media content. The popular content is considered popular enough that other NMSC nodes have requested it in the past and the content has also been stored as a local copy in memory of those NMSC nodes.

The operator network 741 may select a suitable relay NMSC 1007 based on different criteria, including but not limited to available cache storage, available bandwidth between the NMSC nodes, and the like. In this example, the operator network 741 selects the node NMSC-C as the relay, and may send a relay initiation signal 1008 to the relay node NMSC-C, including an instruction to begin caching the A-Media stream and to start relaying this stream to the designated peer node NMSC-A using a specified route.

The relay node NMSC-C may begin caching the A-Media stream and relaying 1009 the A-Media stream to the node NMSC-A. The A-Media stream is received by node NMSC-A from relay node NMSC-C at 1010. In response to relay acknowledgment 1011 from the relay node NMSC-C to the operator network 741, confirming that the specified media stream is being successfully relayed from the relay node NMSC-C to the peer node NMSC-A, the operator network stops sending the redundant traffic 1012 directly to the peer node NMSC-A. The new route for A-Media stream is sent from the operator network 741 to NMSC-C at 1013, cached and forwarded 1014 by the relay node NMSC-C, and received by node NMSC-A at 1015.

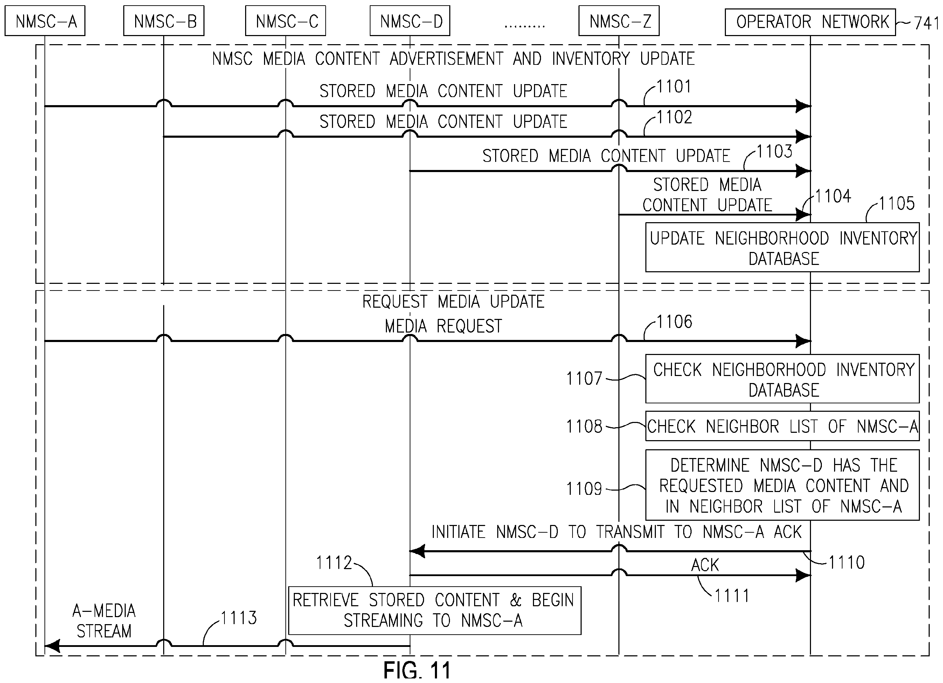

Figure 11 shows an example signal diagram for a case when local coordination among the NMSC peer nodes distributes the multimedia content. In this example, the operator network 741 tracks the media requests by maintaining a neighborhood media inventory database (NMIDB). The operator network 741 periodically receives stored media content updates 1101, 1102, 1103 and 1104 from the nodes NMSC-A, NMSC-B NMSC-C, and NMSC-Z, and updates the NMIDB 1105. The node NMSC-A sends a request 1106 to the operator network 741 for media. The operator network 741 may check 1107 the NMIDB for the requested media content, may check 1108 a neighbor list of NMSC-A, may determine 1109 that node NMSC-D is a neighbor of node NMSC-A, and has the requested media content. The operator network 741 may send an initiation 1110 to the node NMSC-D to transmit the requested media content to the node NMSC-A, and the node NMSC-D may acknowledge 1111 the instruction. The node NMSC-D may retrieve the requested media content from memory and begin streaming 1112 the media content to the node NMSC-A. The node NMSC-A receives the requested media content at 1113.

## Claims

1. A method of enabling an ad hoc network (600), comprising:
receiving advertised capabilities (303) from a plurality of available radio access technologies, RATs (RAT_1-RAT_N);
comparing quality of service, QoS, requirements (302) of a multimedia application (APP_1-APP_K) to the advertised capabilities (303) of the available RATs (RAT_1-RAT_N);
selecting a radio access technology, RAT, from the plurality of available RATs (RAT_1-RAT_N);
allocating multimedia packets to available unlicensed frequency bands for use by the RAT selected from the plurality of available RATs (RAT_1-RAT_N) based on the comparison of QoS requirements (302) of the multimedia application (APP_1-APP_K) to the advertised capabilities (303) of the available RATs (RAT_1 -RAT_N); and
using peer-to-peer communication with at least one other node to coordinate a cluster of nodes as the ad hoc network (600).

2. The method of claim 1, further comprising:
receiving channel quality measurements (305) from each of the plurality of RATs (RAT_1-RAT_N), wherein the allocating of multimedia packets is further based on a comparison of the QoS requirements (302) of the multimedia applications (APP_1-APP_K) to the channel quality measurements (305).

3. The method of claim 1, further comprising:
fusing spectrum sensing reports received from at least one sensing function, wherein the allocation of the multimedia packets to frequency bands is further based on the fused sensing reports.

4. The method of claim 1, further comprising:
controlling a sensing (416) of a frequency spectrum to occur only in unlicensed frequency bands.

5. The method of claim 1, further comprising:
separating the multimedia packets of associated applications by a higher media access control, MAC, layer (411) according to the RAT selected for carrying the multimedia packets; and
using a plurality of lower level MAC layers (407), each lower MAC layer associated with a respective RAT, to support access control of the multimedia packets for the each of the RATs individually;
using a plurality of physical layers (406), each associated with a respective RAT, to provide QoS feedback for each RAT;
transferring a flow of the multimedia packets to a different RAT on a condition that the QoS requirement of an application is not satisfied.

6. The method of claim 1, further comprising:
using a network interface (712) configured to handle Layer 3 protocols of the ad hoc network (600), including routing of multimedia packets between multiple nodes in the ad hoc network (600).

7. The method of claim 1, further comprising:
interfacing with an operator network entity to manage caching operations used to store and forward the multimedia packets from an operator application server to other designated ad hoc network nodes.

8. The method of claim 1, further comprising:
providing abstraction for application layers to be transparent to dynamic updates in the RAT assignment.

9. The method of claim 1, wherein at least one RAT is a femtocell RAT, further comprising:
providing multimedia and infotainment services to a home area network.

10. The method of claim 1, further comprising:
receiving multimedia packets from a server network; and
relaying the multimedia packets to a cluster of nodes in the ad hoc network (600).

11. A neighborhood multimedia sharing controller, NMSC, (401) comprising:
a dynamic spectrum management, DSM, management entity (301) configured to:
receive advertised capabilities (303) from a plurality of available radio access technologies, RATs (RAT_1-RAT_N);
compare quality of service, QoS, requirements (302) of a multimedia application (APP_1-APP_K) to the advertised capabilities (303) of the available RATs (RAT_1-RAT_N);
select a radio access technology, RAT, from a plurality of available RATs (RAT_1-RAT_N);
allocate multimedia packets to available unlicensed frequency bands for use by the RAT selected from the plurality of available RATs (RAT_1-RAT_N) based on the comparison of QoS requirements (302) of the multimedia application (APP_1 - APP_K) to the advertised capabilities (303) of the available RATs (RAT_1-RAT_N); and
a network interface configured to perform peer-to-peer communication with at least one other node to coordinate a cluster of nodes as an ad hoc network (600).

12. The NMSC of claim 11, further comprising:
a DSM adapter (404) comprising a higher media access control, MAC, layer (411) for separating the multimedia packets of associated applications, according to the RAT selected for carrying the packets; and
a plurality of lower level MAC layers (407), each lower MAC layer (407) associated with a respective RAT and configured to support access control of the packets for the each of the RATs individually;
a plurality of physical layers (406), each associated with a respective RAT, configured to provide QoS feedback for each RAT to the DSM adapter (404);
wherein the DSM adapter (404) is configured to adjust flow of the packets to a different RAT on a condition that the QoS requirement of an application is not satisfied.

13. The NMSC of claim 11, further comprising a network interface (712) configured to handle Layer 3 protocols of an ad hoc network, including routing of multimedia packets between multiple NMSCs in the ad hoc network.

14. The NMSC of claim 13, further comprising:
a wireless access network accelerator interface (744) configured to interface with an operator network entity to manage caching operations used to store and forward the multimedia packets from an operator application server to other designated ad hoc network nodes.

15. The NMSC of claim 11, further comprising an NMSC application interface (705) configured to provide abstraction for application layers to be transparent to dynamic updates in the RAT assignment.

## Patentansprüche

1. Verfahren zum Ermöglichen eines Ad-hoc-Netzwerks (600), umfassend:
Empfangen angegebener Fähigkeiten (303) von mehreren verfügbaren Funkzugangstechnologien, Radio Access Technologies bzw. RATs, (RAT_1-RAT_N);
Vergleichen der Servicequalität, Quality of Service bzw. QoS, Erfordernisse (302) einer Multimediaapplikation (APP_1 - APP_K) mit den angegebenen Fähigkeiten (303) der verfügbaren RATs (RAT_1-RAT_N);
Auswählen einer Funkzugangstechnologie, RAT, aus den mehreren verfügbaren RATs (RAT_1-RAT_N);
Zuweisen von Multimediapaketen an verfügbare, nichtlizenzierte Frequenzbänder zur Verwendung durch die RAT, ausgewählt aus den mehreren verfügbaren RATs (RAT_1-RAT_N) auf Basis des Vergleichs der QoS-Erfordernisse (302) der Multimediaapplikation (APP_1-APP_K) mit den angegebenen Fähigkeiten (303) der verfügbaren RATs (RAT_1-RAT_N); und
Verwenden von Peer-to-Peer-Kommunikation mit mindestens einem anderen Knoten zum Koordinieren eines Clusters von Knoten als das Ad-hoc-Netzwerk (600).

2. Verfahren nach Anspruch 1, ferner umfassend:
Empfangen von Kanalqualitätsmessungen (305) von jeder der mehreren RATs (RAT_1-RAT_N), wobei das Zuweisen der Multimediapakete ferner auf einem Vergleich der QoS-Erfordernisse (302) der Multimediaapplikationen (APP_1-APP_K) mit den Kanalqualitätsmessungen (305) basiert.

3. Verfahren nach Anspruch 1, ferner umfassend:
Fusionieren von Spektrumerfassungsberichten, die von mindestens einer Erfassungsfunktion empfangen werden, wobei die Zuweisung der Multimediapakete an die Frequenzbänder ferner auf den fusionierten Erfassungsberichten basiert.

4. Verfahren nach Anspruch 1, ferner umfassend:
Steuern eines Erfassens (416) eines Frequenzspektrums, das nur in nichtlizenzierten Frequenzbändern auftritt.

5. Verfahren nach Anspruch 1, ferner umfassend:
Trennen der Multimediapakete zugeordneter Applikationen durch eine höhere Medienzugriffssteuerungs-, Media Access Control bzw. MAC, Ebene (411) gemäß der RAT, die für das Tragen der Multimediapakete ausgewählt wurde; und
Verwenden mehrerer MAC-Schichten auf niedrigerer Ebene (407), wobei jede MAC-Schicht einer entsprechenden RAT zugeordnet ist, um die Zugriffskontrolle der Multimediapakete für jede der RATs individuell zu unterstützen;
Verwenden mehrerer physikalischer Schichten (406), wobei jede einer entsprechenden RAT zugeordnet ist, um eine QoS-Rückmeldung für jede RAT bereitzustellen;
Übertragen eines Flusses der Multimediapakete an eine unterschiedliche RAT unter einer Bedingung, dass das QoS-Erfordernis einer Applikation nicht befriedigt ist.

6. Verfahren nach Anspruch 1, ferner umfassend:
Verwenden einer Netzwerkschnittstelle (712), die dafür konfiguriert ist, die Schicht-3-Protokolle des Ad-hoc-Netzwerks (600) zu handhaben, einschließlich des Routings der Multimediapakete zwischen mehrfachen Knoten in dem Ad-hoc-Netzwerk (600).

7. Verfahren nach Anspruch 1, ferner umfassend:
Schnittstellenbildung mit einer Bedienernetzwerkentität zum Verwalten von Cachingvorgängen, die zum Speichern und Weiterleiten der Multimediapakete von einem Bedienerapplikationsserver an andere designierte Ad-hoc-Netzwerk-Knoten verwendet werden.

8. Verfahren nach Anspruch 1, ferner umfassend:
Bereitstellen einer Abstraktion für Applikationsschichten, die für dynamische Aktualisierungen in der RAT-Zuweisung transparent sein sollen.

9. Verfahren nach Anspruch 1, wobei mindestens eine RAT eine Femtozellen-RAT ist, ferner umfassend:
Bereitstellen von Multimedia- und Infotainmentdiensten an ein Heimnetzwerk.

10. Verfahren nach Anspruch 1, ferner umfassend:
Empfangen von Multimediapaketen von einem Servernetzwerk; und
Weiterleiten der Multimediapakete an ein Cluster von Knoten in dem Ad-hoc-Netzwerk (600).

11. Nachbarschafts-Multimedia-Sharing-Controller, NMSC, (401) umfassend:
eine dynamisch Spektrumverwaltung, DSM, Verwaltungsentität (301), konfiguriert für:
das Empfangen angegebener Fähigkeiten (303) von mehreren verfügbaren Funkzugangstechnologien, Radio Access Technologies bzw. RATs, (RAT_1-RAT_N);
Vergleichen der Servicequalität, Quality of Service bzw. QoS, Erfordernisse (302) einer Multimediaapplikation (APP_1 - APP_K) mit den angegebenen Fähigkeiten (303) der verfügbaren RATs (RAT_1-RAT_N);
Auswählen einer Funkzugangstechnologie, RAT, aus mehreren verfügbaren RATs (RAT_1-RAT_N);
Zuweisen von Multimediapaketen an verfügbare, nichtlizenzierte Frequenzbänder zur Verwendung durch die RAT, die aus den mehreren verfügbaren RATs (RAT_1-RAT_N) auf Basis des Vergleichs der QoS-Erfordernisse (302) der Multimediaapplikation (APP_1-APP_K) mit den angegebenen Fähigkeiten (303) der verfügbaren RATs (RAT_1-RAT_N) ausgewählt wurde; und
eine Netzwerkschnittstelle, die dafür konfiguriert ist, Peer-to-Peer-Kommunikation mit mindestens einem anderen Knoten zum Koordinieren eines Clusters von Knoten als das Ad-hoc-Netzwerk (600) durchzuführen.

12. NMSC nach Anspruch 11, ferner umfassend:
ein DSM-Adapter (404), umfassend eine höhere Medienzugriffssteuerungs-, MAC, Schicht (411) zum Trennen der Multimediapakete zugeordneter Applikationen gemäß der RAT, die für das Tragen der Pakete ausgewählt wurde; und mehrere MAC-Schichten auf niedrigerer Ebene (407), wobei jede niedrigere MAC-Schicht (407) einer entsprechenden RAT zugeordnet und dafür konfiguriert ist, die Zugriffskontrolle der Pakete für jede der RATs individuell zu unterstützen;
mehrere physikalische Schichten (406), wobei jede einer entsprechenden RAT zugeordnet ist, die dafür konfiguriert sind, eine QoS-Rückmeldung für jede RAT an den DSM-Adapter bereitzustellen; wobei der DSM-Adapter (404) dafür konfiguriert ist, den Fluss der Pakete an eine unterschiedliche RAT unter einer Bedingung anzupassen, dass das QoS-Erfordernis einer Applikation nicht befriedigt ist.

13. NMSC nach Anspruch 11, ferner umfassend eine Netzwerkschnittstelle (712), die dafür konfiguriert ist, die Schicht-3-Protokolle eines Ad-hoc-Netzwerks (600) zu handhaben, einschließlich des Routings der Multimediapakete zwischen mehrfachen NMSCs in dem Ad-hoc-Netzwerk.

14. NMSC nach Anspruch 13, ferner umfassend:
eine drahtlose Zugangsnetzbeschleunigerschnittstelle (744), die für eine Schnittstellenbildung mit einer Bedienernetzwerkentität zum Verwalten von Cachingvorgängen, die zum Speichern und Weiterleiten der Multimediapakete von einem Bedienerapplikationsserver an andere designierte Ad-hoc-Netzwerk-Knoten verwendet werden, konfiguriert ist.

15. NMSC nach Anspruch 11, ferner umfassend eine NMSC-Applikationschnittstelle (705), die dafür konfiguriert ist, eine Abstraktion für Applikationsschichten, die für dynamische Aktualisierungen in der RAT-Zuweisung transparent sein sollen, bereitzustellen.

## Revendications

1. Procédé d'activation d'un réseau ad hoc (600), comprenant de:
recevoir des capacités annoncées (303) depuis une pluralité de technologies d'accès radio disponibles, RATs (RAT_1_-RAT_N) ;
compare des exigences de qualité de service QoS (302) d'une application multimédia (APP_1-APP_K) avec les capacités annoncées (303) des RATs disponibles (RAT_1_-RAT_N) ;
sélectionner une technologie d'accès radio RAT parmi la pluralité de RATs disponibles (RAT_1- RAT_N) ;
allouer des paquets multimédia aux bandes de fréquence disponibles hors licence en vue d'une utilisation par la RAT sélectionnée parmi la pluralité de RATs disponibles (RAT_1_-RAT_N) sur la base de la comparaison des exigences QoS (302) de l'application multimédia (APP_1-APP_K) avec les capacités annoncées (303) des RATs disponibles (RAT_1_-RAT_N) ; et
utiliser une communication pair à pair avec au moins un autre noeud pour coordonner une grappe de noeuds comme le réseau ad hoc (600).

2. Procédé selon la revendication 1, comprenant en outre de :
recevoir des mesures de qualité de canal (305) depuis chacune de la pluralité de RATs (RAT_1_-RAT_N), dans lequel l'allocation des paquets multimédia est en outre basée sur une comparaison des exigences QoS (302) des applications multimédia (APP_1-APP_K) avec les mesures de qualité de canal (305).

3. Procédé selon la revendication 1, comprenant en outre de :
fusionner des rapports de détection de spectre reçus depuis au moins une fonction de détection, dans lequel l'allocation des paquets multimédia aux bandes de fréquence est en outre basée sur les rapports de détection fusionnés.

4. Procédé selon la revendication 1, comprenant en outre de :
commander une détection (416) d'un spectre de fréquence afin qu'elle se produise uniquement dans des bandes de fréquence hors licence.

5. Procédé selon la revendication 1, comprenant en outre de :
séparer les paquets multimédia des applications associées par une couche de commande d'accès au média supérieure, MAC, (411) selon la RAT sélectionnée pour transporter les paquets multimédia ; et
utiliser une pluralité de couches MAC de niveau inférieur (407), chaque couche MAC inférieure étant associée à une RAT respective, afin de prendre en charge une commande d'accès des paques multimédia pour chacune des RATs individuellement ;
utiliser une pluralité de couches physiques (406), chacune associée à une RAT respective, afin de fournir une rétroaction QoS pour chaque RAT;
transférer un flux des paquets multimédia à une RAT différente à une condition que l'exigence de QoS d'une application n'est pas satisfaite.

6. Procédé selon la revendication 1, comprenant en outre de :
utiliser une interface de réseau (712) configurée pour gérer des protocoles de couche 3 du réseau ad hoc (600), incluant de router des paquets multimédia entre des noeuds multiples dans le réseau ad hoc (600).

7. Procédé selon la revendication 1, comprenant en outre de :
s'interfacer avec une entité d'opérateur de réseau pour gérer des opérations de mise en mémoire cache utilisées pour mémoriser et acheminer les paquets multimédia depuis un serveur d'application d'opérateur vers d'autres noeuds ad hoc désignés.

8. Procédé selon la revendication 1, comprenant en outre de :
fournir une abstraction pour les couches d'application afin qu'elles soient transparentes aux mises à jour dynamiques dans l'assignation de RAT.

9. Procédé selon la revendication 1, dans lequel au moins une RAT est une RAT de femto cellule, comprenant en outre de :
fournir des services multimédia et d'info-divertissement à un réseau de zone résidentielle.

10. Procédé selon la revendication 1, comprenant en outre de :
recevoir des paquets multimédia depuis un réseau de serveur ; et
relayer les paquets multimédia vers un groupe de noeuds dans le réseau ad hoc (600).

11. Contrôleur de partage multimédia de voisinage, NMSC, (401) comprenant :
une entité (301) de gestion de spectre dynamique configurée pour :
recevoir des capacités annoncées (303) depuis une pluralité de technologies d'accès radio disponibles, RATs (RAT_1_-RAT_N) ;
comparer des exigences de qualité de service QoS (302) d'une application multimédia (APP_1-APP_K) avec les capacités annoncées (303) des RATs disponibles (RAT_1_-RAT_N) ;
sélectionner une technologie d'accès radio RAT parmi la pluralité de RATs disponibles (RAT_1_-RAT_N) ;
allouer des paquets multimédia aux bandes de fréquence disponibles hors licence en vue d'une utilisation par la RAT sélectionnée parmi la pluralité de RATs disponibles (RAT_1_-RAT_N) sur la base de la comparaison des exigences QoS (302) de l'application multimédia (APP_1-APP_K) avec les capacités annoncées (303) des RATs disponibles (RAT_1_-RAT_N) ; et
une interface réseau configurée pour effectuer une communication pair à pair avec au moins un autre noeud pour coordonner une grappe de noeuds comme le réseau ad hoc (600).

12. NMSC selon la revendication 11, comprenant en outre :
un adaptateur DSM (404) comprenant une couche de commande d'accès au média supérieure, MAC, (411) pour séparer les paquets multimédia des applications associées, selon la RAT sélectionnée pour transporter les paquets multimédia ; et
une pluralité de couches MAC de niveau inférieur (407), chaque couche MAC inférieure étant associée à une RAT respective et configurée pour prendre en charge une commande d'accès des paques multimédia pour chacune des RATs individuellement ;
une pluralité de couches physiques (406), chacune associée à une RAT respective configurée pour fournir une rétroaction QoS pour chaque RAT à l'adaptateur DSM (404);
dans lequel l'adaptateur DSM (404) est configuré pour ajuster un flux des paquets à une RAT différente à une condition que l'exigence QoS d'une application n'est pas satisfaite.

13. NMSC selon la revendication 11, comprenant en outre une interface de réseau (712) configurée pour gérer des protocoles de couche 3 d'un réseau ad hoc, incluant le routage de paquets multimédia entre des NMSCs multiples dans le réseau ad hoc.

14. NMSC selon la revendication 13, comprenant en outre :
une interface d'accélérateur de réseau d'accès sans fil (744) configurée pour s'interfacer avec une entité d'opérateur de réseau pour gérer des opérations de mise en mémoire cache utilisées pour mémoriser et acheminer les paquets multimédia depuis un serveur d'application d'opérateur vers d'autres noeuds ad hoc désignés.

15. NMSC selon la revendication 11, comprenant en outre une interface d'application NMSC (705) configurée pour fournir une abstraction pour les couches d'application afin qu'elles soient transparentes aux mises à jour dynamiques dans l'assignation de RAT.
